# EUROPÄISCHE PATENTANMELDUNG

(11) **EP 1 077 408 A2**
(43) Veröffentlichungstag der Anmeldung: **21.02.2001**
(21) Anmeldenummer: 00117463.0
(22) Anmeldetag: 11.08.2000
(51) Int. Cl.: G06F 9/445, G06F 9/44

(54) **Verfahren zum Betrieb einer Nebenstellenanlage**

(30) Priorität: 13.08.1999 DE 19938402
(71) Anmelder: Tenovis GmbH & Co. KG, 60362 Frankfurt (DE)
(72) Erfinder: Hemmerich, Thomas, 63477 Maintal (DE)
(74) Vertreter: Bohnenberger, Johannes, Dr.

(57) **Zusammenfassung**

Es wird ein Verfahren und eine Nebenstellenanlage (5) vorgeschlagen, wobei die Nebenstellenanlage (5) einen ersten und einen zweiten Speicher (20, 30) umfaßt, wobei Konfigurationsdaten (31) eine Information über die Anzahl und/oder die Art von Teilnehmern umfassen und wobei eine Erweiterung des zweiten Speichers (30) dadurch erfolgt, daß in einer Konfigurationsdatei die Größe eines Nutzspeicherbereichs (34) abgelegt wird und somit eine Neucompilierung von Programmen nicht notwendig ist.

## Beschreibung

### Stand der Technik

Die Erfindung geht aus von einem Verfahren zum Betrieb einer Nebenstellenanlage nach der Gattung des Hauptanspruchs und von einer Nebenstellenanlage nach der Gattung des nebengeordneten Vorrichtungsanspruchs. Es sind Nebenstellenanlagen bekannt, die einen Festwertspeicher, beispielsweise als Festplatte, und einen Schreib-/Lesespeicher, beispielsweise als RAM-Speicher, umfassen. Hierbei werden Datenbereiche bedingt durch Compiler und Linker statisch in einem Programm festgelegt. Durch diese vorgegebene Festlegung richtet sich dabei die Konfiguration des Datenspeichers nach dem größtmöglichen Ausbau, der für das System vorgesehen ist. Besteht die Anforderung, das gleiche Programm, das heißt ein Programm mit gleicher Leistungsfähigkeit mit kleinerem Speicher zu liefern, müssen die Datenbereiche verkleinert werden. Dies geschieht von Hand. Programme müssen neu compiliert und gelinkt werden, wobei mehrere Programme verwaltet werden müssen. Es fehlt somit die Flexibilität, den Datenbereich beliebig zu konfigurieren ohne in das Programm eingreifen zu müssen.

### Vorteile der Erfindung

Das erfindungsgemäße Verfahren mit den Merkmalen des Hauptanspruchs und die erfindungsgemäße Nebenstellenanlage mit den Merkmalen des nebengeordneten Vorrichtungsanspruchs haben demgegenüber den Vorteil, daß Speicherbereiche eines Systems universell für vorgegebene Anforderungen konfigurierbar sind. Es ergibt sich somit eine sehr viel einfachere und kostengünstigere Möglichkeit, das gleiche Programm für die Verwendung mit unterschiedlich großen Datenmengen zu verwenden. Weiterhin werden organisatorische Abläufe wie kompilieren, linken und verwalten von Programmen eingespart. Nicht zuletzt ergibt sich dadurch auch eine Einsparung von Speicherbausteinen sowie eine flexible Reaktionsmöglichkeit auf Konfigurationsveränderungen, beispielsweise dadurch daß aufgrund von gestiegenen Anforderungen oder aufgrund eines größeren Umfangs von System/Teilnehmerdaten eine Vergrößerung des Datenbereichs notwendig wird.

Durch die in den Unteransprüchen aufgeführten Maßnahmen sind vorteilhafte Weiterbildungen und Verbesserungen des im Hauptanspruch angegebenen Verfahrens und der im nebengeordneten Vorrichtungsanspruch angegebenen Nebenstellenanlage möglich.

Besonders vorteilhaft ist, daß zur Änderung des Umfangs von System/Teilnehmerdaten die Konfigurationsdaten verändert werden. Dadurch ist eine sehr einfache Anpassung des Systems an eine unterschiedlich große Menge von System/Teilnehmerdaten durch einfache Änderung eines oder mehrerer Einträge in der Konfigurationsdatei möglich, wobei die veränderten Einträge dem Umfang der System/Teilnehmerdaten entsprechen beziehungsweise wobei der Umfang der System/Teilnehmerdaten durch die Einträge bestimmt wird.
Weiterhin ist von Vorteil, daß die gleichen Programmdaten für unterschiedlich große Speicherbereiche benutzt werden. Eine Neucompilierung beziehungsweise die Vorhaltung von an sich identischen Programmen, die sich lediglich dadurch unterscheiden, daß sie unterschiedlich umfangreiche System/Teilnehmerdaten verwalten, erübrigt sich somit.

Weiterhin ist von Vorteil, daß in Abhängigkeit der Konfigurationsdaten die Speicherkapazität des Schreib-/Lesespeichers verändert wird. Dadurch kann die physikalische Speicherkapazität individuell dem geforderten Umfang von System/Teilnehmerdaten angepaßt werden. Somit können teure Speicherbausteine eingespart werden. Eine sukzessive Erweiterung der physikalischen Speicherkapazität des Schreib-/Lesespeichers ist möglich, falls der Umfang von System/Teilnehmerdaten ansteigt. Hierzu ist lediglich ein Neustart des Systems notwendig.

### Zeichnung

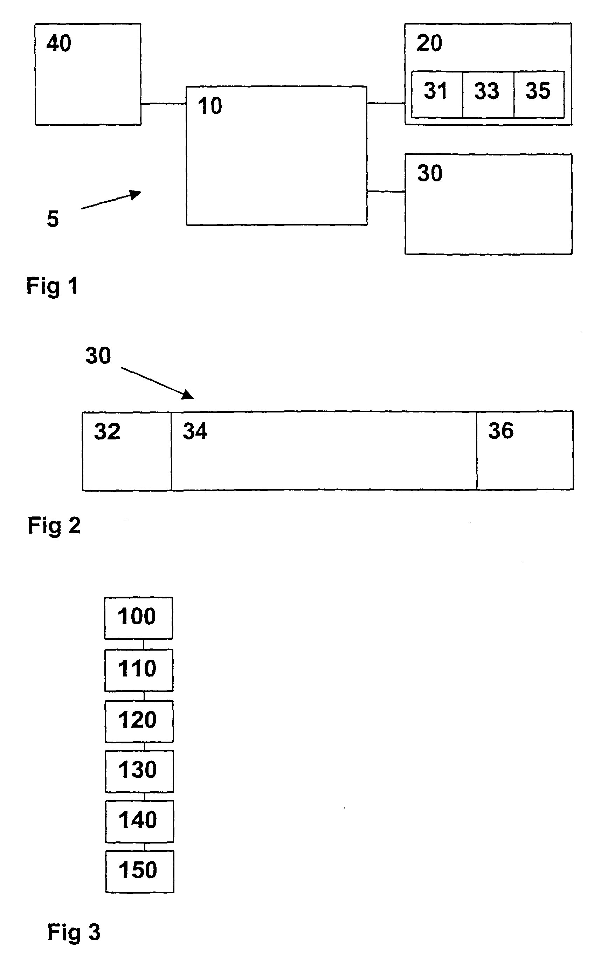

Ein Ausführungsbeispiel der Erfindung ist in der Zeichnung dargestellt und in der nachfolgenden Beschreibung näher erläutert.
Es zeigen Figur 1 ein Blockschaltbild einer erfindungsgemäßen Nebenstellenanlage,
Figur 2 eine beispielhafte Speicherkonfiguration und
Figur 3 ein Ablaufdiagramm für einen Neustart eines Systems.

### Beschreibung der Ausführungsbeispiele

In Figur 1 ist ein Blockschaltbild einer erfindungsgemäßen Nebenstellenanlage 5 dargestellt. Insbesondere ist die Nebenstellenanlage 5 als Datenverarbeitungsanlage ausgeführt, weshalb sie im folgenden auch als Datenverarbeitungsanlage 5 bezeichnet wird. Die Nebenstellenanlage 5 umfaßt erfindungsgemäß einen ersten Speicher 20, einen zweiten Speicher 30, eine Zentraleinheit 10 und eine Anzahl von nicht dargestellten Teilnehmeranschlußleitungen. Sowohl der erste Speicher 20 als auch der zweite Speicher 30 sind mit der Zentraleinheit 10 verbunden. Der erste Speicher 20 wird im folgenden auch als Hintergrundspeicher 20 bezeichnet, da er, zumindest in Teilbereichen und insbesondere was die Teilnehmerdaten betrifft, mit dem Inhalt des zweiten Speichers 30 übereinstimmt beziehungsweise leicht in ein Format gebracht werden kann, das dem Format des zweiten Speichers 30 entspricht. Im ersten Speicher 20 befinden sich erfindungsgemäß Konfigurationsdaten 31, Programmdaten 33 und Teilnehmerdaten 35. Den Programmdaten 33 entspricht dabei im wesentlichen der Programmcode. Die Teilnehmerdaten 35 umfassen hierbei sowohl Teilnehmerdaten im strengen Sinn als auch teilnehmerunabhängige Systemdaten, weil weshalb im folgenden auch von System/Teilnehmerdaten 35 gesprochen wird. Die System/Teilnehmerdaten 35 sind erfindungsgemäß schwerpunktmäßig teilnehmerbezogen, können jedoch auch systembezogen sein. Der erste Speicher 20 ist als nichtflüchtiger Speicher zur dauerhaften Speicherung von Informationen ausgelegt. Erfindungsgemäß ist der erste Speicher 20 insbesondere als magnetische Speicherplatte, beispielsweise als Festplatte ausgelegt. Es ist jedoch auch möglich, den ersten Speicher 20 als magnetischen, optischen und/oder magneto-optischen Band- oder Plattenspeicher vorzusehen. Der zweite Speicher 30 ist insbesondere als flüchtiger Schreib-/Lesespeicher, beispielsweise als RAM (random access memory) vorgesehen, kann jedoch auch als nicht-flüchtiger Speicher, beispielsweise als Flash-EPROM (erasable programable read only memory) ausgelegt sein. Der zweite Speicher 30 ist erfindungsgemäß beispielsweise der Arbeitsspeicher der Zentraleinheit 10. Weiterhin umfaßt die erfindungsgemäße Nebenstellenanlage 5 Ein-/Ausgabeeinnrichtungen 40, die der Kommunikation der Zentraleinheit 10 mit anderen Komponenten der Nebenstellenanlage 5 beziehungsweise mit an die Nebenstellenanlage 5 angeschlossenen Teilnehmern dienen. Die Ein-/Ausgabeeinrichtungen 40 sind ebenso mit der Zentraleinheit 10 verbunden, im weiteren aber nicht näher ausgeführt, da sich der Kern der Erfindung nicht auf die Ein-/Ausgabeeinrichtungen 40 bezieht.

In Figur 2 ist eine beispielhafte Speicherkonfiguration des zweiten Speichers 30 dargestellt. Hierbei ist der zweite Speicher 30 in drei Speicherbereiche aufgeteilt. Ein erster Speicherbereich 32 enthält die Programmdaten 33, ein zweiter Speicherbereich 34, der im folgenden auch als Nutzspeicherbereich 34 bezeichnet wird, enthält die Teilnehmerdaten 35 und ein dritter Speicherbereich 36 ist nicht belegt beziehungsweise nicht reserviert.

Der zweite Speicher 30 hat eine vorgegebene Speicherkapazität, die beispielsweise durch die Anzahl der verwendeten Speicherchips und deren Speicherkapazität vorgegeben ist. Diese Speicherkapazität wird zum einen vom Umfang der zu verwaltenden Teilnehmerdaten 35 bestimmt und zum anderen von den Anforderungen während des Betriebs der Nebenstellenanlage 5. Erfindungsgemäß kann die Speicherkapazität des zweiten Speichers 30 so gewählt werden, daß sie nur geringfügig größer ist als die benötigte Speicherkapazität zum Betrieb eines bestimmten Programms, das heißt zum Betrieb mit bestimmten Programmdaten, und zur Verarbeitung eines bestimmten Umfangs von Teilnehmerdaten. Die Speicherkapazität des zweiten Speichers 30 kann somit individuell angepaßt werden, so daß der Anteil des dritten Speicherbereichs 36, das heißt der nicht belegte Speicher, im Vergleich zur gesamten Speicherkapazität relativ gering ist.

Das erfindungsgemäße Verfahren und die erfindungsgemäße Nebenstellenanlage 5 sehen vor, daß für die Definition der Speicherbereiche 32, 34 im zweiten Speicher 30 die Größe der Speicherbereiche 32, 34 in den Konfigurationsdaten 31 definiert ist, wobei die Konfigurationsdaten 31 im ersten Speicher 20 gespeichert sind. Es wird beispielsweise die Größe der benötigten Speicherbereiche 32, 34 als Anzahl der benötigten Bytes angegeben. Beim Starten des Systems wird dann die gespeicherte Anzahl von Bytes aus den Konfigurationsdaten 31 gelesen und über eine Speicheranforderroutine bzw. eine Speicherreservierungsroutine der benötigte Speicher belegt. Hierbei wird von einem Betriebssystem der Nebenstellenanlage 5 die gesamte Speicherkapazität des zweiten Speichers 30 verwaltet und es werden von dieser maximal möglichen Speicherkapazität des zweiten Speichers 30 die Speicherbereiche 32, 34 von der Speicheranforderroutine beziehungsweise der Speicherreservierungsroutine reserviert oder belegt. Über Zeigerfunktionen kann ein Anforderer, beispielsweise das Programm zur Verwaltung von Teilnehmerdaten einer Nebenstellenanlage, das die Speicheranforderroutine zur Belegung eines Speicherbereichs benutzt, frei über den für das Programm reservierten Speicherbereich 32, 34 verfügen. Selbstverständlich können die Speicherbereiche 32, 34 noch feiner untergliedert werden beziehungsweise aus mehreren nicht dargestellten Teilspeicherbereichen bestehen. Beispielsweise kann vorgesehen sein, daß mehrere Programme mittels der Nebenstellenanlage 5 betrieben werden und daß der erste Speicherbereich 32 aus mehreren Teilspeicherbereichen besteht, die nicht notwendigerweise physikalisch oder logisch in einem zusammenhängenden Bereich des zweiten Speichers 30 vorliegen müssen. Analog dazu können die Teilnehmerdaten 35 auf mehrere Teilspeicherbereiche des Nutzspeicherbereichs 34 verteilt sein.

In Figur 3 ist ein Ablaufdiagramm für einen Neustart der erfindungsgemäßen Nebenstellenanlage 5 dargestellt. Bei einem ersten Programmpunkt 100 wird das System eingeschaltet und das System gelangt zu einem zweiten Programmpunkt 110. Beim zweiten Programmpunkt 110 werden die Programmdaten 33 zumindest teilweise vom ersten Speicher 20 in den zweiten Speicher 30 kopiert, woraufhin das System zu einem dritten Programmpunkt 120 gelangt. Den Programmdaten 33 entspricht ein Programm, das die Nebenstellenanlage 5 steuert. Das Programm liest im dritten Programmpunkt 120 die Konfigurationsdaten 31, die sich im ersten Speicher 20 befinden, und gelangt zu einem vierten Programmschritt 130. Beim vierten Programmschritt 130 führt das Programm eine Reservierung von Speicherbereichen 32, 34 im zweiten Speicher 30, insbesondere eine Reservierung des Nutzspeicherbereichs 34, entsprechend den gelesenen Konfigurationsdaten 31 durch und gelangt zu einem fünften Programmpunkt 140. Beim fünften Programmpunkt 140 werden die Teilnehmerdaten 35, die im ersten Speicher 20 gespeichert sind, zumindest teilweise in den Nutzspeicherbereich 34 des zweiten Speichers 30 kopiert und das System gelangt zu einem sechsten Programmpunkt 150. Im sechsten Programmpunkt 150 kann die Nebenstellenanlage 5 bestimmungsgemäß betrieben werden.

Im beschriebenen Ablaufdiagramm entspricht dem dritten Programmpunkt 120 das Lesen der Anzahl von Bytes die für die Teilnehmerdaten 35 benötigt werden. Ein Speicherbereich von der Größe dieser Anzahl von Bytes wird dann im vierten Programmpunkt 130 für die Teilnehmerdaten 35 reserviert. Das Programm, daß den Programmdaten 33 im ersten Speicherbereich 32 entspricht, kann sodann als Anforderer über die Anzahl von Bytes im zweiten Speicherbereich 34 verfügen und ist in der Lage die Teilnehmerdaten im fünften Programmpunkt 140 vom ersten Speicher 20 in den zweiten Speicher 30 zu kopieren.

Eine Erweiterung des Datenspeichers erfolgt über die Veränderung der Anzahl von Bytes in den Konfigurationsdaten 31. Die neue, veränderte Speicheranforderung kann entweder durch Neustarten der Nebenstellenanlage 5 belegt werden oder durch das Anhängen an den bereits belegten Speicher durchgeführt werden.

## Patentansprüche

1. Verfahren zum Betrieb einer Nebenstellenanlage (5), wobei die Nebenstellenanlage (5) einen ersten Speicher (20) und einen zweiten Speicher (30) umfaßt, dadurch gekennzeichnet, daß im ersten Speicher (20) Konfigurationsdaten (31), Programmdaten (33) und System/Teilnehmerdaten (35) gespeichert sind, daß die Konfigurationsdaten (31) eine Information über die Anzahl und/oder die Art von Teilnehmern umfassen und daß zur Inbetriebnahme der Nebenstellenanlage (5) folgende Schritte durchgeführt werden:
- die Programmdaten (33) werden von dem ersten Speicher (20) zumindest teilweise in den zweiten Speicher (30) kopiert,
- in Abhängigkeit der Konfigurationsdaten (31) im ersten Speicher (20) wird im zweiten Speicher (30) ein Nutzspeicherbereich (34) reserviert,
- es werden System/Teilnehmerdaten (35) von dem ersten Speicher (20) in den reservierten Nutzspeicherbereich (34) kopiert.

2. Verfahren nach Anspruch 1, dadurch gekennzeichnet, daß zur Änderung des Umfangs von System/Teilnehmerdaten (35) die Konfigurationsdaten (31) verändert werden.

3. Verfahren nach Anspruch 1 oder 2, dadurch gekennzeichnet, daß die gleichen Programmdaten (31) für unterschiedlich große Nutzspeicherbereiche (34) benutzt werden.

4. Verfahren nach einem der vorhergehenden Ansprüche, dadurch gekennzeichnet, daß in Abhängigkeit der Konfigurationsdaten (31) die Speicherkapazität des zweiten Speichers (30) verändert wird.

5. Nebenstellenanlage (5) mit einem ersten Speicher (20) und einem zweiten Speicher (30), dadurch gekennzeichnet, daß im ersten Speicher (20) Konfigurationsdaten (31), Programmdaten (33) und System/Teilnehmerdaten (35) gespeichert sind, daß die Konfigurationsdaten (31) eine Information über die Anzahl und/oder die Art von Teilnehmern umfassen und daß in Abhängigkeit der Konfigurationsdaten (31) im ersten Speicher (20) ein Nutzspeicherbereich (34) des zweiten Speichers (30) reserviert ist.

6. Nebenstellenanlage (5) nach Anspruch 5, dadurch gekennzeichnet, daß zur Verarbeitung eines veränderten Umfangs von System/Teilnehmerdaten (35) die Konfigurationsdaten (31) änderbar sind.

7. Nebenstellenanlage (5) nach Anspruch 5 oder 6, dadurch gekennzeichnet, daß gleiche Programmdaten (33) für unterschiedlich große Nutzspeicherbereiche (34) benutzbar sind.

8. Nebenstellenanlage (5) nach Anspruch 5, 6 oder 7, dadurch gekennzeichnet, daß die Speicherkapazität des zweiten Speichers (30) in Abhängigkeit der Konfigurationsdaten (31) veränderbar ist.
